# EUROPÄISCHE PATENTSCHRIFT

(11) **EP 1 152 244 B1**
(45) Veröffentlichungstag und Bekanntmachung des Hinweises auf die Patenterteilung: **16.08.2006**
(21) Anmeldenummer: 01108285.6
(22) Anmeldetag: 02.04.2001
(51) Int. Cl.: G01N 35/04

(54) **Vorrichtung zur Positionierung von Objekten**
Device for positioning objects
Dispositif de positionnement d'objets

(30) Priorität: 11.04.2000 DE 10017718
(43) Veröffentlichungstag der Anmeldung: 07.11.2001
(73) Patentinhaber: Leuze electronic GmbH + Co. KG, 73277 Owen/Teck (DE)
(72) Erfinder: Gseller, Rolf, 73230 Kirchheim/Teck (DE)
(74) Vertreter: Ruckh, Rainer Gerhard

(56) Entgegenhaltungen:
- US-A- 3 897 216
- US-A- 4 798 703
- US-A- 4 947 695
- US-A- 5 424 036

## Beschreibung

Die Erfindung betrifft eine Vorrichtung zur Positionierung von Objekten gemäß dem Oberbegriff der Anspruchs 1.

Generell werden derartige Vorrichtungen bei Anlagen mit Transportsystemen eingesetzt, bei welchen Objekte in vorgegebene Sollpositionen für eine maschinelle oder manuelle Bearbeitung eingefahren werden müssen.

Dabei besteht eine wesentliche Problematik darin, dass Objekte nicht nur in vorgegebene Sollpositionen möglichst genau positioniert werden müssen. Vielmehr müssen die Objekte dabei auch eindeutig identifizierbar sein, um Verwechslungen von Objekten zu vermeiden.

Ein Beispiel hierfür sind Blutanalysegeräte, mittels derer Analysen von Blutproben durchgeführt werden. Die Blutproben sind in einzelnen Probenröhrchen enthalten, welche nacheinander dem Blutanalysegerät zugeführt werden. Typischerweise wird mittels einer Nadel, die über den Verschluss eines Probenröhrchens in dessen Innenraum eingeführt wird, eine Probe entnommen, welche anschließend einer Analyse unterzogen wird.

Derartige Blutanalysegeräte weisen einen hohen Durchsatz auf, so dass diesem eine große Menge an Probenröhrchen pro Zeiteinheit zugeführt wird. Bei der Durchführung der Analysen ist eine wesentliche Voraussetzung, dass die einzelnen Probenröhrchen eindeutig identifizierbar sind und die Analysen den jeweiligen Probenröhrchen zugeordnet werden können. Eine Verwechslung einzelner Proben könnte für den Patienten, dem die Blutproben entnommen wurden, eine Fehldiagnose bedeuten, die letztlich auch zu einer Gefährdung des Patienten führen könnte.

Um derartige Risiken auszuschließen, werden typischerweise die Probenröhrchen mit eindeutigen Kennungen gekennzeichnet, die vom Bedienpersonal bei der Durchführung der Blutanalyse identifiziert werden können. Damit können zwar Verwechslungen einzelner Probenröhrchen ausgeschlossen werden, jedoch muss die Durchführung der Blutanalysen und insbesondere der Transport der Probenröhrchen zu dem Blutanalysegerät vom Bedienpersonal überwacht werden. Abgesehen davon, dass durch menschliches Versagen nach wie vor eine fehlerhafte Zuordnung von durchgeführten Analysen zu den zugehörigen Proben in Probenröhrchen möglich ist, ist bei derartigen Anlagen ein hoher Personaleinsatz erforderlich.

Das Dokument US-A-5,672,317 beschreibt eine analytische Analysevorrichtung mit Racks, die über nebeneinander liegende benachbarte Kompartimenten verfügen. Jedes dieser Kompartimente ist geeignet, ein Probengefäß aufzunehmen. Zur Identifikation der Position jedes Kompartiments in dem Rack ist jeweils an seiner Außenwand ein Barcode-Etikett vorgesehen. Bei der Bewegung beim manuellen Einsetzen des Racks in eine freie Spur einer Transportvorrichtung werden diese Barcode-Etiketten nacheinander von einem Barcodes-leer gelesen. Zusätzlich liest derselbe Barcode-Leser auch die Barcode-Etiketten der Probengefäße in dem Rack sowie in dem Falle, daß eines der Kompartimente leer ist, einen weiteren Barcode, der sich auf der Innenseite jedes Kompartiments befindet und der zum Nachweis der Abwesenheit eines Probengefäßes dient. In einer vorgegebenen Sollposition, die von einem induktiven Sensor bestimmt wird, der auf einen Metall-Kopf an einem Ende des Unterteils des Racks reagiert, wird das Rack durch einen Hebemagneten in der Spur der Transportvorrichtung festgehalten, bis die Spur von dem Kontrollsignal der zentralen Kontrolleinheit eines Analysators wieder freigegeben wird.

Eine gattungsgemäße Vorrichtung ist aus der EP 0 275 072 A2 bekannt. Die dort beschriebene Vorrichtung bildet eine Datenerfassungseinrichtung für Milch, die in Teilvolumina bei verschiedenen Lieferanten in einem Sammeltank eines Transportfahrzeugs gesammelt wird. Bei der Annahme werden von den Teilvolumina Proben in Probegefäße abgefüllt, die in hintereinander, insbesondere im Kreis, oder nebeneinander angeordneten Stativelementen hintereinander in Reihe fest positioniert sind. Mittels einer gemeinsam mit dem Abfüllelement verfahrbaren Leseeinrichtung sind sowohl eine Markierung an einem jeden Stativelement als auch längs der Reihen der Probegefäße angeordnete Codes auslesbar, so dass die Position eines jeden Probegefäßes mit den Daten für die Probe eines jeden Probegefäßes von der Datenerfassungseinrichtung zusammengebracht werden kann, damit später im Labor die Daten den Probegefäßen zugeordnet werden können.

Aus der US-A-3,897,216 ist eine Aufnahmevorrichtung für Proberöhrchen bekannt, die auf einer Fördereinheit bewegbare Haltevorrichtungen für die Probenröhrchen umfasst. Jede Haltevorrichtung ist als Aufsatz ausgebildet, der auf die Fördereinheit aufsetzbar ist. Dabei weist die Haltevorrichtung Einschubfächer auf, in welche jeweils ein Probenröhrchen einführbar ist. In die Wand einer Stirnseite eines Einschubfaches ist ein vorgegebenes Lochmuster eingearbeitet, welches einen Binärcode zur Identifikation des Einschubfaches definiert. Dieser Binärcode wird mit einem optischen Sensor erfasst. Der Sensor weist einen Sender und Empfänger auf, die beidseits des Lochmusters angeordnet sind. Mit den von dem Sender emittierten Lichtstrahlen werden die Löcher des Lochmusters durchstrahlt und gelangen zum Empfänger. Dort wird aus dem registrierten Empfangslichtrnuster der Binärcode rekonstruiert.

Aus der DE-A-4,947,695 ist eine rotationssymmetrische Aufnahmevorrichtung für Probenröhrchen bekannt. Diese weist eine kreisförmige Anordnung identisch ausgebildeter Halterungen auf, in welche jeweils ein Probenröhrchen einführbar ist. Zur exakten Positionierung der Probenröhrchen relativ zu einem Messinstrument ist ein Sensorarray vorgesehen, welches einen Sendelicht emittierenden Sender und einen Empfänger aufweist. Mit dem Sensorarray wird eine Positionsmessung gegen eine definierte reflektierende Kante der jeweiligen Halterung durchgeführt.

Die US-A-5,424,036 betrifft eine Analysevorrichtung mit einer rotationssymmetrischen Aufnahmevorrichtung, welche in Form von Teilungen unterschiedliche Aufnahmen für Reagenzbehälter aufweist. Zur Identifikation der Aufnahmen sind diese mit Identifikationscodes versehen. Zur Identifikation der Reagenzbehälter sind diese mit weiteren Codes versehen.

Der Erfindung liegt die Aufgabe zugrunde eine Vorrichtung bereitzustellen, welche eine exakte, automatisierte Positionierung von Objekten gewährleistet, wobei gleichzeitig eine eindeutige Identifikation und Verfolgung der Objekte gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Positionierung von Objekten, die von Probenröhrchen gebildet sind, in einer Sollposition und weist einen Sendelichtstrahlen emittierenden Sender, einen Empfangslichtstrahlen empfangenden Empfänger und eine Auswerteeinheit aufweisenden optischen Sensor auf. Mittels der Sendelichtstrahlen wird die Sollposition abgetastet. Die Vorrichtung weist wenigstens eine Aufnahmevorrichtung, in welcher eine vorgegebene Anzahl von Objekten in vorgegebenen Einschubpositionen gelagert ist und ein Transportsystem, mittels dessen die Aufnahmevorrichtung relativ zum optischen Sensor bewegt ist, auf. Jede Einschubposition ist durch eine Positions-Marke gekennzeichnet, wobei diese an dem jeweiligen Einschub angeordnet ist. Die Aufnahmevorrichtung wird angehalten, sobald die Positions-Marke einer Einschubposition für ein vorgegebenes Objekt von dem optischen Sensor erfasst wird, wobei das jeweilige Objekt anhand von einer an diesem angebrachten Objekt-Marke mittels des Sensors identifizierbar ist.

Der wesentliche Vorteil der erfindungsgemäßen Vorrichtung besteht darin, dass mittels des optischen Sensors nicht nur eine zielgenaue Positionierung der Objekte in einer Sollposition ermöglicht wird. Zudem wird mittels des optischen Sensors eine eindeutige Identifizierung der Objekte gewährleistet, wobei gleichzeitig eine eindeutige Zuordnung der Objekte zu den Einschubpositionen in der Aufnahmevorrichtung gewährleistet ist.

Durch die Identifizierung der Objekte ist eine Verwechslung verschiedener Objekte mit großer Sicherheit ausgeschlossen. Dabei ist zudem durch die eindeutige Zuordnung der Objekte zu den Einschubpositionen der Aufnahmevorrichtungen eine genaue Lokalisierung und Verfolgbarkeit der einzelnen Objekte innerhalb des Transportsystems gegeben.

In einer besonders vorteilhaften Ausführungsform der Erfindung ist die Vorrichtung Bestandteil einer Blutanalysevorrichtung. Die Blutanalysevorrichtung weist ein Blutanalysegerät auf. Ein Bestandteil des Blutanalysegeräts ist eine Probenentnahmevorrichtung mit einer Nadel. Die Objekte sind von Probenröhrchen gebildet, die Blutproben enthalten und mit einem Verschluss verschlossen sind. Zur Entnahme von Proben aus dem Probenröhrchen wird die Nadel über den Verschluss in das Innere des jeweiligen Probenröhrchens eingeführt.

Erfindungsgemäß erfolgt die Zufuhr der Probenröhrchen zu der Nadel automatisiert, wobei die Probenröhrchen in Aufnahmevorrichtungen bildenden Probenhaltern einzeln nacheinander der Probenentnahmevorrichtung zugeführt werden. Die Probenröhrchen sind dabei in Einschüben der Probenhalter gelagert.

An diesen Einschüben ist jeweils eine Positions-Marke angeordnet, die aus einem Positions-Barcode und zwei Referenz-Linienelementen besteht. In dem Positions-Barcode ist die Nummer des Einschubs und damit dessen Lage innerhalb des Transportsystems kodiert. An den Probenröhrchen ist zudem jeweils eine als Objekt-Barcode ausgebildete Objekt-Marke angeordnet.

Die Referenz-Linienelemente bilden eine Zielmarke, welche zur Positionierung eines Einschubs in die Sollposition, in welcher die Nadel angeordnet ist, dient. Bei Einfahren in die Sollposition wird zweckmäßigerweise der Abtastbereich des optischen Sensors so gewählt, dass allein die Positions-Marken an den Einschüben, nicht jedoch die Objekt-Marken erfasst werden.

Sobald die Positionierung eines Einschubs in der Sollposition abgeschlossen ist, wird in der Vorrichtung anhand der Erfassung des Positions-Barcodes die Position des Einschubs ermittelt. Dann wird der Abtastbereich des optischen Sensors erweitert, so dass auch der Objekt-Barcode erfasst wird. Dabei erfolgt nicht nur eine eindeutige Identifizierung des Probenröhrchens und dessen Inhalts, sondern auch eine Zuordnung zum jeweiligen Positions-Barcode, so dass auch eine eindeutige Lokalisierung des Probenröhrchens innerhalb des Transportsystems gewährleistet ist.

Bei in der Sollposition liegendem Einschub wird die dort angeordnete Nadel der Probenentnahmevorrichtung in das entsprechende Probenröhrchen eingeführt, wonach aus dem Probenröhrchen eine Probe zur Durchführung einer Analyse entnommen wird. Die Analyseergebnisse werden zusammen mit den Informationen des zugeordneten Positions-Barcodes und Objekt-Barcodes abgespeichert, so dass das Analysenergebnis eindeutig zugeordnet werden kann.

Der Transport der Probenröhrchen zur Probenentnahmevorrichtung sowie die Entnahme einer Probe aus dem Probenröhrchen erfolgt somit automatisiert und ohne jeglichen Personaleinsatz.

Die Erfindung wird im nachstehenden anhand der Zeichnungen erläutert. Es zeigen:
- Figur 1:: Schematische Darstellung eines Ausführungsbeispiels der erfindungsgemäßen Vorrichtung mit auf einem Transportsystem geförderten, Aufnahmevorrichtungen bildenden Probenhaltern und einem optischen Sensor zur Positionierung von in Einschüben der Probenhalter gelagerten, Objekte bildenden Probenröhrchen in einer Sollposition.
- Figur 2:: Seitenansicht eines Probenhalters gemäß Figur 1 mit in Einschüben gelagerten, außerhalb der Sollposition liegenden Probenröhrchen.
- Figur 3:: Probenhalter gemäß Figur 2 mit einem ein Probenröhrchen enthaltenden, in der Sollposition liegenden Einschub.
- Figur 4:: Probenhalter gemäß Figur 2 mit einem leeren, außerhalb der Sollposition liegenden Einschub.
- Figur 5:: Probenhalter gemäß Figur 2 mit einem leeren, innerhalb der Sollposition liegenden Einschub.

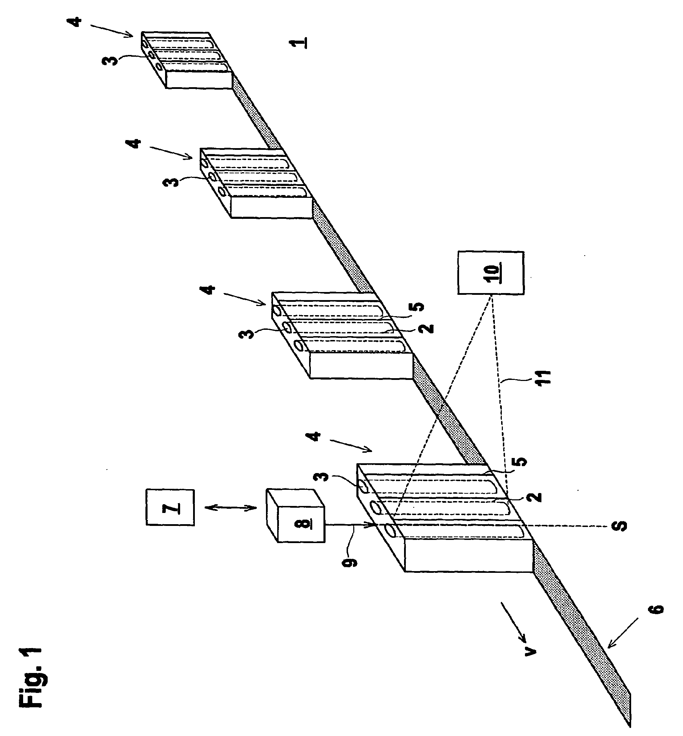

Figur 1 zeigt schematisch ein Ausführungsbeispiel der erfindungsgemäßen Vorrichtung zur Positionierung von Objekten in einer Sollposition.

Die Vorrichtung ist im vorliegenden Fall Bestandteil einer Blutanalysevorrichtung 1. Die Objekte sind von Probenröhrchen 2 gebildet, die vorzugsweise Blutproben enthalten und an ihrer Oberseite jeweils mit einem Verschluss 3 in Form eines Pfropfens verschlossen sind. Die Probenröhrchen 2 sind in mehreren Probenhaltern 4 gelagert, welche Aufnahmevorrichtungen für die Objekte bilden. Die Probenhalter 4 sind jeweils identisch ausgebildet und weisen jeweils eine vorgegebene Anzahl von Einschüben 5 auf. Die Einschübe 5 sind identisch ausgebildet und dienen jeweils zur Aufnahme eines Probenröhrchens 2.

Die Probenhalter 4 werden mittels eines Transportsystems 6 in einer Förderrichtung v bewegt und einem Blutanalysegerät 7 zugeführt. Das Blutanalysegerät 7 bildet das Kernstück der Blutanalysevorrichtung 1 und dient zur Durchführung von Analysen von Blutproben.

Das Transportsystem 6 ist von einem Fördersystem gebildet, in welchem die Probenhalter 4 in vorgegebenen Abständen hintereinander angeordnet sind. Die Probenröhrchen 2 stehen senkrecht im jeweiligen Probenhalter 4. Die Probenröhrchen 2 sind mit vertikal verlaufenden Längsachsen in den Probenhaltern 4 angeordnet, so dass die Verschlüsse an den Oberseiten der Probenröhrchen 2 frei zugänglich sind.

Die auf dem Fördersystem transportierten Probenhalter 4 werden nacheinander einer mit dem Blutanalysegerät 7 zusammenarbeitenden Probenentnahmevorrichtung 8 zugeführt. Vorzugsweise bildet die Probenentnahmevorrichtung 8 einen Teil des Blutanalysegeräts 7.

Die Probenentnahmevorrichtung 8 weist eine automatisch gesteuerte Nadel 9 zur Entnahme von Proben aus den Probenröhrchen 2 auf. Zur Entnahme einer Probe wird das entsprechende Probenröhrchen 2 in einer Sollposition direkt unterhalb der Nadel 9 positioniert. Die Sollposition ist dabei von einer vertikal verlaufenden Geraden S gebildet, die quer zur Förderrichtung v des Fördersystems verläuft. Dabei verläuft die Längsachse der Nadel 9 längs dieser Geraden S.

Sobald ein vorgegebenes Probenröhrchen 2 in der Sollposition liegt, wird das Fördersystem angehalten und die Nadel 9 durch den Verschluss 3 in das Innere des Probenröhrchens 2 zur Entnahme einer Probe eingeführt.

Die Vorrichtung zur Positionierung der Probenröhrchen 2 in die Sollposition umfasst im Wesentlichen einen optischen Sensor 10 sowie eine nicht dargestellte Steuereinheit zur Ansteuerung des optischen Sensors 10 und der Probenentnahmevorrichtung 8.

Der optische Sensor 10 ist als Barcodelesegerät ausgebildet. Dieser weist im Wesentlichen einen Sendelichtstrahlen 11 emittierenden Sender, einen Empfangslichtstrahlen empfangenden Empfänger, eine Ablenkeinheit sowie eine Auswerteeinheit auf.

Die über die Ablenkeinheit geführten Sendelichtstrahlen 11 tasten periodisch einen Abtastbereich ab Mit dem Barcodelesegerät werden innerhalb des Abtastbereichs liegende, Kontrastmuster aufweisende Marken erfasst. Dabei wird den an den Marken als Empfangslichtstrahlen reflektierten Sendelichtstrahlen 11 entsprechend dem Kontrastmuster der Marke eine Amplitudenmodulation aufgeprägt, welche zur Erfassung der Marke in der Auswerteeinheit ausgewertet wird.

Der von den Sendelichtstrahlen 11 erfasste Abtastbereich verläuft längs der die Sollposition bildenden Geraden S. Prinzipiell kann mit den Sendelichtstrahlen 11 des Barcodelesegeräts ein linienförmiger Abtastbereich erfasst werden. Im vorliegenden Fall wird mittels der Sendelichtstrahlen 11 ein flächiges Raster abgetastet, um auf dem Probenhalter 4 und/oder am Probenröhrchen 2 angeordnete Marken zu erfassen. Das Raster bildet ein rechteckförmiges Flächenelement, wobei die Größe dieses Flächenelements in der Ebene des abgetasteten Probenhalters 4 an die Größen der zu erfassenden Marken angepasst ist.

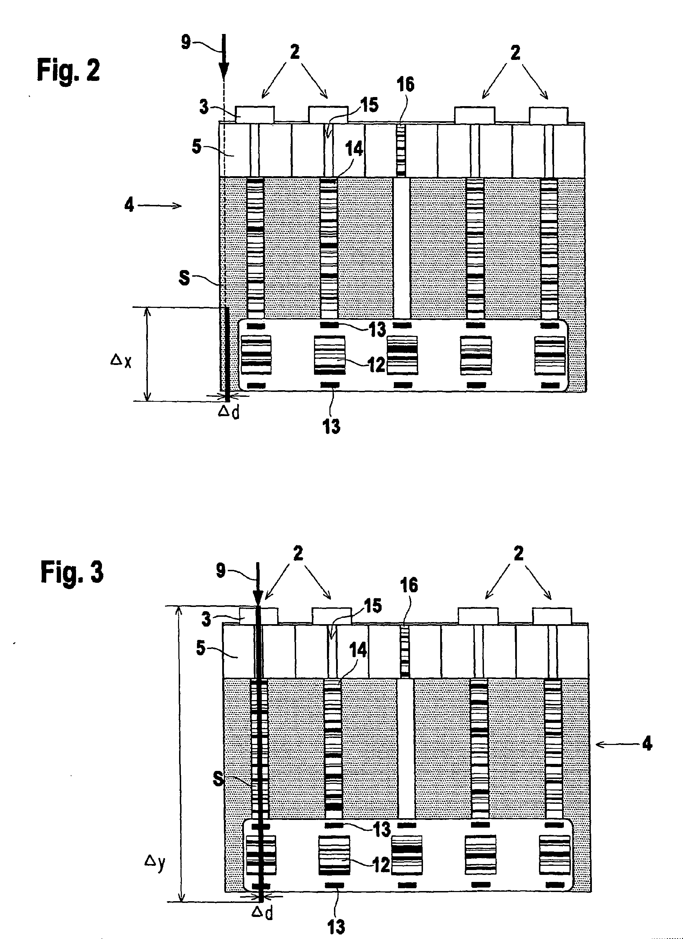

Die von den Sendelichtstrahlen 11 überstrichenen Raster und die zu erfassenden Marken sind in den Figuren 2 - 5 dargestellt.

In den Figuren 2 - 5 ist jeweils die dem optischen Sensor 10 zugewandte und von den Sendelichtstrahlen 11 abgetastete Seitenfläche eines Probenhalters 4 dargestellt.

Der Probenhalter 4 weist eine im Wesentlichen quaderförmige Kontur auf, wobei die dem optischen Sensor 10 zugewandte Seitenfläche eine im Wesentlichen ebene, rechteckförmige Fläche bildet. Der in den Figuren 2-5 dargestellte Probenhalter 4 weist fünf identische, in vertikaler Richtung verlaufende Einschübe 5 auf. Die Einschübe 5 sind äquidistant angeordnet und münden an der Oberseite des Probenhalters 4 aus. Die in den Einschüben 5 gelagerten, im Wesentlichen zylindrischen Probenröhrchen 2 stehen mit ihren Verschlüssen über die oberen Ränder der Einschübe 5 hervor.

Zur Positionierung eines Einschubes 5 in die Sollposition sind in den Bereichen der Unterseiten der Einschübe 5 auf der Seitenfläche des Probenhalters 4 Positions-Marken aufgebracht. Jede einem Einschub 5 zugeordnete Positions-Marke verläuft in Richtung der Längsachse dieses Einschubs 5.

Jede Positions-Marke weist einen Positions-Barcode 12 auf. In diesem Positions-Barcode 12 ist die Nummer des jeweiligen Einschubs 5 des Probenhalters 4 kodiert. Dabei sind die Einschübe 5 sämtlicher Probenhalter 4 mit fortlaufenden Nummern bezeichnet. Durch die jeweilige Nummer ist somit die Position eines jeden Einschubs 5 innerhalb der Gesamtheit aller Probenhalter 4 des Transportsystems 6 eindeutig gekennzeichnet. Zweckmäßigerweise ist die Nummer eines Einschubs 5 nicht nur im jeweiligen Positions-Barcode 12 am Einschub 5 angebracht, sondern auch im Klartext in Form einer Ziffernfolge. Die Positions-Barcodes 12 bestehen aus einer Folge von hellen und dunklen Linienelementen, deren Längsachsen quer zur Längsachse des jeweiligen Einschubs 5 und quer zur Abtastrichtung der Sendelichtstrahlen 11 des optischen Sensors 10 verlaufen.

Jeder Positions-Barcode 12 weist an seinen längsseitigen Enden eine Ruhezone vorgegebener Breite auf. In jeder dieser Ruhezonen liegt ein Referenz-Linienelement 13. Die Längsachsen der Referenz-Linienelemente 13 verlaufen parallel zu den Längsachsen der Linienelemente des jeweiligen Positions-Barcodes 12 .

Die eine Zielmarke bildenden Referenz-Linienelemente 13 sind Bestandteil einer Positions-Marke und dienen zur Positionierung des jeweiligen Einschubs 5 in der Sollposition.

Auf den Außenseiten der Probenröhrchen 2 ist als Objekt-Marke jeweils ein Objekt-Barcode 14 aufgebracht, in welchem der Inhalt eines Probenröhrchens 2 kodiert ist.

Jeder Einschub 5 weist eine Öffnung 15 auf, welche an der dem optischen Sensor 10 zugewandten Seitenfläche des Probenhalters 4 ausmündet. Die Öffnung 15 ist an die Größe eines Objekt-Barcodes 14 angepasst, so dass dieser durch die Öffnung 15 vollständig sichtbar ist und vom optischen Sensor 10 erfasst wird, falls das Probenröhrchen 2 in dem Einschub 5 liegt. Dabei verläuft die Längsachse der Öffnung 15 in Längsrichtung des Einschubs 5.

Weiterhin ist an der der Öffnung 15 gegenüberliegenden Innenseite eines jeden Einschubs 5 ein Referenz-Barcode 16 zur Überprüfung der Belegung des Einschubs 5 mit einem Probenröhrchen 2 vorgesehen. Der Referenz-Barcode 16 ist bei leerem Einschub 5 durch die Öffnung 15 sichtbar und kann so von dem optischen Sensor 10 abgetastet werden. Ist jedoch ein Probenröhrchen 2 im Eischub gelagert, verdeckt das Probenröhrchen 2 den Referenz-Barcode 16, so dass dieser vom optischen Sensor 10 nicht abgetastet werden kann.

Die Positions-Marken, die Objekt-Marken und die Referenz-Marken werden von dem optischen Sensor 10 abgetastet, wobei der Abtastbereich des Sensors 10 von einem flächigen Raster gebildet ist, dessen Längsachse entlang der die Sollposition gebildeten Geraden S verläuft, entlang derer auch die Nadel 9 der Probenentnahmevorrichtung 8 verläuft.

Die Breite des Rasters ist konstant und ist in den Figuren 2 - 5 mit Δd bezeichnet. Der optische Sensor 10 ist zwischen zwei Betriebsmodi umschaltbar. In einem ersten Betreibsmodus wird zur Positionierung eines Einschubes 5 in der Sollposition von den Sendelichtstrahlen 11 des optischen Sensors 10 ein Raster der Breite Δd und der Länge Δx abgetastet. Die Länge des Rasters ist derart an die Größe der Positions-Marken angepasst, dass vom optischen Sensor 10 die Positions-Marken vollständig erfasst werden, die Objekt-Marken und die Referenz-Barcodes 16 jedoch außerhalb des Rasters liegen.

In einem zweiten Betriebsmodus wird bei einem in der Sollposition liegenden Einschub 5 vom optischen Sensor 10 ein Raster der Breite Δd und der Länge Δy abgetastet. Die Länge Δy des Rasters erstreckt sich dabei über die gesamte Höhe des Probenhalters 4, so dass im zweiten Betriebsmodus sowohl die Positions-Marken als auch die Objekt-Marken und die Referenz-Barcodes 16 erfasst werden.

Die Umschaltung vom ersten in den zweiten Betriebsmodus erfolgt durch ein Triggersignal, welches intern in der Auswerteeinheit generiert wird, sobald ein Einschub 5 in der Sollposition liegend vom optischen Sensor 10 erfasst wird.

Die Umschaltung vom zweiten in den ersten Betriebsmodus erfolgt durch eine externes Triggersignal, welches vorzugsweise in der Steuereinheit generiert wird und in den optischen Sensor 10 eingelesen wird.

Die Funktionsweise der erfindungsgemäßen Vorrichtung wird im Folgenden anhand der Figuren 2 - 5 erläutert.

Bei der Anordnung gemäß Figur 2 wird der Probenhalter 4 entlang der Förderrichtung v relativ zum optischen Sensor 10 bewegt. Dabei liegt keiner der Einschübe 5 in der Sollposition. Der optische Sensor 10 befindet sich im ersten Betriebsmodus, so dass ein Raster der Länge Δx zur Erfassung der Positions-Marken abgetastet wird.

Die Positionierung in die Sollposition ist dann abgeschlossen, wenn das Raster vollständig auf den die Zielmarke bildenden Referenz-Linienelementen 13 einer Positions-Marke liegt.

Die Längen der identisch ausgebildeten Referenz-Linienelemente 13 sind dabei etwas größer als die Breite Δd des Rasters und kleiner als die Durchmesser der Verschlüsse ausgebildet. Wird bei der Abtastung einer Positions-Marke festgestellt, dass das gesamte Raster auf den Referenzlinien liegt, ist sichergestellt, dass der jeweilige Einschub 5 mit einer hinreichenden Genauigkeit in der Sollposition liegt, so dass in jedem Fall die Nadel 9 der Probenentnahmevorrichtung 8 oberhalb des Verschlusses 3 liegt und in diesen eingestochen wird. Insbesondere ist durch die Dimensionierung des Rasters und der Referenz-Linienelemente 13 gewährleistet, dass ein Einschub 5 gegenüber der die Sollposition bildenden Geraden S nicht verkippt ist, was ein Einführen der Nadel 9 in den Verschluss 3 behindern würde.

Nachdem ein Einschub 5 in der Sollposition positioniert wurde und der Positions-Barcode 12 des jeweiligen Einschubes 5 erfasst wurde, wird das Fördersystem angehalten und der optische Sensor 10 in den zweiten Betriebsmodus umgeschaltet. Damit wird der Abtastbereich auf das Raster der Länge Δy vergrößert, so dass auch der Objekt-Barcode 14 des Probenröhrchens 2, welches in dem in der Sollposition liegenden Einschub 5 gelagert ist, erfasst wird. Diese Situation ist in Figur 3 dargestellt.

Nachdem sowohl die Positions-Marke des Einschubs 5 in der Sollposition und die Objekt-Marke des entsprechenden Probenröhrchens 2 erfasst wurde, wird über die Steuereinheit die Nadel 9 der Probenentnahmevorrichtung 8 über den Verschluss 3 in das Innere des Probenröhrchens 2 eingeführt. Die dabei entnommene Probe wird in dem Blutanalysegerät 7 analysiert. Das Analyseergebnis wird zusammen mit dem ermittelten Positions-Barcode 12 und dem ermittelten Objekt-Barcode 14 abgespeichert, so dass eine eindeutige Zuordnung des Analyseergebnisses zu dem Probenröhrchen 2 und dessen Anordnung innerhalb der Einschübe 5 der Probenhalter 4 gewährleistet ist.

Sobald diese Vorgänge abgeschlossen sind, wird in der Steuereinheit das Triggersignal zur Umschaltung in den ersten Betriebsmodus generiert. Gleichzeitig wird über die Steuereinheit das Fördersystem wieder in Bewegung gesetzt. Danach wird der Probenhalter 4 weiter gefördert, bis der nächste Einschub 5 in der Sollposition positioniert ist. Auf diese Weise werden sämtliche Einschübe 5 der Probenhalter 4 nacheinander in der Sollposition positioniert.

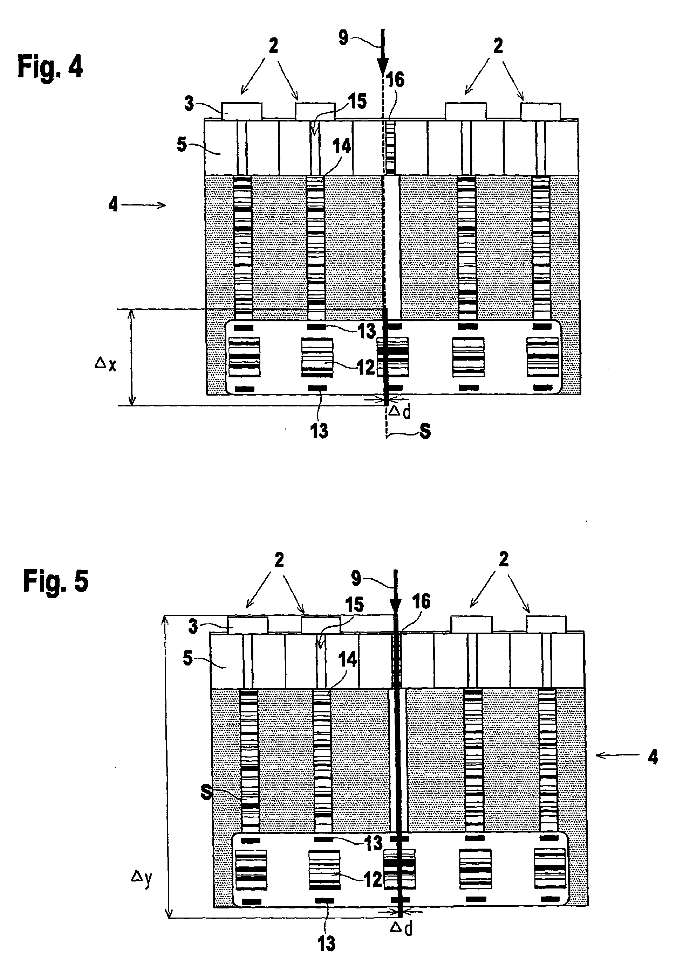

Figur 4 zeigt die Positionierung eines leeren Einschubes 5 in der Sollposition. Die Positionierung ist dabei noch nicht abgeschlossen, da das Raster des optischen Sensors 10 noch nicht vollständig auf den Referenz-Linienelementen 13 dieses Einschubes 5 liegt.

Figur 5 zeigt diesen Einschub 5 in der Sollposition, wobei bereits die Umschaltung in den zweiten Betriebsmodus nach Erfassung des Positions-Barcodes 12 an diesem Einschub 5 erfolgt ist. Da dieser Einschub 5 leer ist, wird kein Objekt-Barcode 14 eines Probenröhrchens 2, sondern der Referenz-Barcode 16 an diesem Einschub 5 erfasst. Dadurch wird in der Auswerteeinheit des Sensors 10 festgestellt, dass der Einschub 5 leer ist. Vorzugsweise wird dann in der Auswerteeinheit eine Warn- oder Fehlermeldung generiert, welche dem Bedienpersonal die Nichtbelegung des Einschubes 5 anzeigt. Aufgrund der Warn- oder Fehlermeldung wird über die Steuereinheit auch die Probenentnahmevorrichtung 8 deaktiviert. Dadurch bleibt die Nadel 9 in ihrer Ruhestellung, um Beschädigungen oder Fehlfunktionen zu vermeiden.

### Bezugszeichenliste

- (1): Blutanalysevorrichtung
- (2): Probenröhrchen
- (3): Verschluss
- (4): Probenhalter
- (5): Einschübe
- (6): Transportsystem
- (7): Blutanalysegerät
- (8): Probenentnahmevorrichtung
- (9): Nadel
- (10): Optischer Sensor
- (11): Sendelichtstrahlen
- (12): Positions-Barcode
- (13): Referenz-Linienelemente
- (14): Objekt-Barcode
- (15): Öffnung
- (16): Referenz-Barcode

## Patentansprüche

1. Vorrichtung zur Positionierung von Objekten, die von Probenröhrchen (2) gebildet werden, in einer Sollposition mit einem einen Sendelichtstrahlen (11) emittierenden Sender, einen Empfangslichtstrahlen empfangenden Empfänger und eine Auswerteeinheit aufweisenden optischen Sensor (10), wobei mittels der Sendelichtstrahlen (11) die Sollposition abgetastet wird, mit wenigstens einer Aufnahmevorrichtung, in welcher eine vorgegebene Anzahl von Objekten in vorgegebenen Einschubpositionen gelagert ist, und mit einem Transportsystem (6), mittels dessen die Aufnahmevorrichtung relative zum optischen Sensor (10) bewegt ist, wobei jede Einschubposition durch eine Positions-Marke **gekennzeichnet** und diese Positions-Marke jeweils an diesen Einschüben (5) angeordnet ist, und wobei zudem an den Objekten jeweils eine Objekt-Marke angeordnet und das jeweilige Objekt anhand dieser Objekt-Marke mittels des optischen Sensors (10) identifizierbar ist,
**dadurch gekennzeichnet, daß**
die Aufnahmevorrichtung angehalten wird, sobald die Positions-Marke einer Einschubposition für ein vorgegebenes Objekt von dem optischen Sensor (10) erfasst -wird.

2. Vorrichtung nach Anspruch 1, **dadurch gekennzeichnet, dass** der optische Sensor (10) von einem Barcodelesegerät gebildet ist.

3. Vorrichtung nach einem der Ansprüche 1 oder 2, **dadurch gekennzeichnet, dass** die Aufnahmevorrichtung von einem Probenhalter (4) gebildet ist, in welchen die Objekte bildende Probenröhrchen (2) in die Einschubpositionen bildenden Einschüben (5) gelagert sind.

4. Vorrichtung nach Anspruch 3, **dadurch gekennzeichnet, dass** die in den Einschüben (5) des Probenhalters (4) gelagerten Probenröhrchen (2) parallel verlaufend in Abstand zueinander angeordnet sind, wobei die Längsachsen der Probenröhrchen (2) quer zur Förderrichtung des Probenhalters (4) verlaufen.

5. Vorrichtung nach Anspruch 4, **dadurch gekennzeichnet, dass** die Sollposition längs einer Geraden S verläuft, welche parallel zu den Längsachsen der im Probenhalter (4) gelagerten Probenröhrchen (2) verläuft.

6. Vorrichtung zur nach einem der Ansprüche 4 oder 5, **dadurch gekennzeichnet, dass** die Sendelichtstrahlen (11) des optischen Sensors (10) längs der die Sollposition bildenden Geraden S geführt sind.

7. Vorrichtung zur nach Anspruch 6, **dadurch gekennzeichnet, dass** mittels der Sendelichtstrahlen (11) ein rechteckförmiges flächiges Raster abgetastet wird, wobei die die Sollposition definierende Gerade S innerhalb des Rasters in dessen Längsrichtung verläuft.

8. Vorrichtung zur nach einem der Ansprüche 3 - 7, **dadurch gekennzeichnet, dass** die Positions-Marken jeweils in der Längsachse des zugeordneten Einschubs (5) an der dem optischen Sensor (10) zugewandten Seitenfläche des Probenhalters (4) angeordnet sind, wobei die Positions-Marken jeweils im Bereich des unteren Endes eines im jeweiligen Einschub (5) gelagerten Probenröhrchens (2) angeordnet sind.

9. Vorrichtung zur nach Anspruch 8, **dadurch gekennzeichnet, dass** jede Positions-Marke einen Positions-Barcode (12) aufweist, in welchem die Nummer des Einschubs (5) kodiert ist.

10. Vorrichtung zur nach einem der Ansprüche 8 oder 9, **dadurch gekennzeichnet, dass** jede Positions-Marke zwei Referenz-Linienelemente (13) aufweist, die in Längsrichtung des Einschubs (5) mit quer zu der Längsachse des Einschubes (5) verlaufenden Längsachsen in Abstand hintereinander angeordnet sind.

11. Vorrichtung zur nach Anspruch 9, **dadurch gekennzeichnet, dass** die Referenz-Linienelemente (13) einer Positions-Marke beidseits des Positions-Barcodes (12) in dessen Ruhezonen angeordnet sind.

12. Vorrichtung zur nach einem der Ansprüche 10 oder 11, **dadurch gekennzeichnet, dass** die Längen der Referenz-Linienelemente (13) kleiner als die Breite des vom optischen Sensors (10) abgetasteten Rasters sind.

13. Vorrichtung zur nach Anspruch 12, **dadurch gekennzeichnet, dass** die Referenz-Linienelemente (13) identisch ausgebildet sind.

14. Vorrichtung zur nach einem der Ansprüche 8 - 13, **dadurch gekennzeichnet, dass** bei einem in der Sollposition liegenden Einschub (5) zur Entnahme einer Probe aus dem in diesem Einschub (5) gelagerten Probenröhrchen (2) eine Nadel (9) durch den Verschluss (3) am oberen Ende des Probenröhrchens (2) einführbar ist.

15. Vorrichtung zur nach Anspruch 14, **dadurch gekennzeichnet, dass** der Durchmesser des Verschlusses (3) größer ist als die Länge der Referenz-Linienelemente (13).

16. Vorrichtung zur nach einem der Ansprüche 1 - 15, **dadurch gekennzeichnet, dass** die Objekt-Marke von einem auf der Außenseite eines Probenröhrchens (2) angeordneten Objekt-Barcode (14) gebildet ist, in welchem der Inhalt des Probenröhrchens (2) kodiert ist.

17. Vorrichtung zur nach Anspruch 16, **dadurch gekennzeichnet, dass** jeder Einschub (5) an seiner dem optischen Sensor (10) zugewandten Seite eine Öffnung (15) aufweist, durch welche der Objekt-Barcode (14) auf einem in diesem Einschub (5) gelagerten Probenröhrchen (2) sichtbar ist.

18. Vorrichtung zur nach Anspruch 17, **dadurch gekennzeichnet, dass** an der der Öffnung (15) gegenüberliegenden Innenseite eines Einschubs ein Referenz-Barcode (16) zur Überprüfung der Belegung des Einschubs (5) mit einem Probenröhrchen (2) angeordnet ist, wobei der Referenz-Barcode (16) bei leerem Einschub (5) durch die Öffnung (15) sichtbar und bei belegtem Einschub (5) von dem Probenröhrchen (2) verdeckt ist.

19. Vorrichtung nach einem der Ansprüche 8 - 18, **dadurch gekennzeichnet, dass** in einem ersten Betriebsmodus zur Positionierung eines Einschubes (5) in die Sollposition von den Sendelichtstrahlen (11) des optischen Sensors (10) ein erster Abtastbereich abgetastet wird, welcher an die Größen der Positions-Marken angepasst ist, und dass in einem zweiten Betriebsmodus bei in der Sollposition liegendem Einschub (5) dieser über seine gesamte Länge innerhalb eines zweiten Abtastbereichs abgetastet wird.

20. Vorrichtung nach Anspruch 19, **dadurch gekennzeichnet, dass** ein Einschub (5) in seiner Sollposition liegt, sobald die gesamte Breite des Rasters der Sendelichtstrahlen (11) auf den Referenz-Linienelementen (13) der jeweiligen Positions-Marke liegt.

21. Vorrichtung nach Anspruch 20, **dadurch gekennzeichnet, dass** bei vollständiger Erfassung der Referenz-Linienelemente einer Positions-Marke in dem optischen Sensor (10) ein Triggersignal generiert wird, mittels dessen eine Umschaltung von dem ersten in den zweiten Betriebsmodus erfolgt.

22. Vorrichtung zur nach einem der Ansprüche 20 oder 21, **dadurch gekennzeichnet, dass** der Probenhalter (4) bei einem in der Sollposition liegendem Einschub (5) angehalten ist, so dass bei Identifizierung des im Einschub (5) gelagerten Probenröhrchens (2) die Nadel (9) in deren Verschluss (3) zur Entnahme einer Probe einführbar ist.

23. Vorrichtung nach Anspruch 22, **dadurch gekennzeichnet, dass** bei Detektion eines Referenz-Barcodes (16) im zweiten Betriebsmodus eine Fehler- oder Warnmeldung generiert wird.

24. Vorrichtung nach einem der Ansprüche 19 - 23, **dadurch gekennzeichnet, dass** in den optischen Sensor (10) ein externes Triggersignal zur Umschaltung in den ersten Betriebsmodus einlesbar ist.

25. Vorrichtung nach einem der Ansprüche 1 - 24, **dadurch gekennzeichnet, dass** diese Bestandteil einer Blutanalysevorrichtung (1) ist.

## Claims

1. Device for positioning objects, which are formed by sample tubelets (2), in a target position, comprising a transmitter emitting a transmitted light beam (11), a receiver receiving received light beams and an evaluating unit comprising an optical sensor (10), wherein the target position is scanned by means of the transmitted light beam (11), at least one receiving device in which a predetermined number of objects is mounted in predetermined insert positions, and a transport system (6) by means of which the receiving device is moved relative to the optical sensor (10), wherein each insert position is **characterised by** a position mark and this position mark is arranged at each of these inserts (5), and wherein additionally a respective object mark is arranged at each of the objects and the respective object is identifiable by way of this object mark by means of the optical sensor (10), **characterised in that** the receiving device is stopped as soon as the position mark of an insert position for a predetermined object is detected by the optical sensor (10).

2. Device according to claim 1, **characterised in that** the optical sensor (10) is formed by a barcode reader.

3. Device according to one of claims 1 and 2, **characterised in that** the receiving device is formed by a sample holder (4) in which the sample tubelets (2) forming the objects are mounted in inserts (5) forming the insert positions.

4. Device according to claim 3, **characterised in that** the sample tubelets (2) mounted in the inserts (5) of the sample holder (4) are arranged to extend parallelly at a spacing from one another, wherein the longitudinal axes of the sample tubelets (2) extend transversely to the conveying direction of the sample holder (4).

5. Device according to claim 4, **characterised in that** the target position extends along a straight line S which extends parallel to the longitudinal axes of the sample tubelets (2) mounted in the sample holder (4).

6. Device according to one of claims 4 and 5, **characterised in that** the transmitted light beams (11) of the optical sensor (10) are guided along the straight line S forming the target position.

7. Device according to claim 6, **characterised in that** a rectangular flat grid pattern is spanned by means of the transmitted light beams (11), wherein the straight line S defining the target position extends within the grid pattern in the longitudinal direction thereof.

8. Device according to one of claims 3 to 7, **characterised in that** the position marks are respectively arranged in the longitudinal axis of the associated insert (5) at the side surface of the sample holder (4) facing the optical sensor (10), wherein the position marks are respectively arranged in the region of the lower end of a sample tubelet (2) mounted in the respective insert (5).

9. Device according to claim 8, **characterised in that** each position mark has a position barcode (12) in which the number of the insert (5) is coded.

10. Device according to one of claims 8 and 9, **characterised in that** each position mark has two reference line elements (13) which are arranged in succession at a spacing in longitudinal direction of the insert (5) with longitudinal axes extending transversely to the longitudinal axis of the insert (5).

11. Device according to claim 9, **characterised in that** the reference line elements (12) of a position mark are arranged on both sides of the position barcode (12) in the rest zones thereof.

12. Device according to one of claims 10 and 11, **characterised in that** the lengths of the reference line elements (13) are smaller than the width of the grid pattern scanned by the optical sensor (10).

13. Device according to claim 12, **characterised in that** the reference line elements (13) are of identical construction.

14. Device according to one of claims 8 to 13, **characterised in that** when an insert (5) lies in the target position, for removal of a sample from the sample tubelet (2) mounted in this insert (5) a needle (9) is introducible through the closure (3) at the upper end of the sample tubelet (2).

15. Device according to claim 14, **characterised in that** the diameter of the closure (3) is larger than the length of the reference line elements (13).

16. Device according to one of claims 1 to 15, **characterised in that** the object mark is formed by an object barcode (14), which is arranged on the outer side of its sample tubelet (2) and in which the content of the sample tubelet (2) is coded.

17. Device according to claim 16, **characterised in that** each insert (5) has at its side facing the optical sensor (10) an opening (15) through which the object barcode (14) is visible on a sample tubelet (2) mounted in this insert (5).

18. Device according to claim 17, **characterised in that** arranged at the inner side, which is opposite the opening (15), of an insert is a reference barcode (16) for checking the occupation of the insert (5) by a sample tubelet (2), wherein the reference barcode (16) is visible through the opening (15) when the insert (5) is empty and is covered by the sample tubelet (2) when the insert (5) is occupied.

19. Device according to one of claims 8 to 18, **characterised in that** in a first operating mode for positioning of an insert (5) in the target position a first scanning region adapted to the size of the position marks is scanned by the transmitted light beams (11) of the optical sensor (10) and that in a second operating mode when the insert (5) is lying in the target position this is scanned over its entire length within a second scanning region.

20. Device according to claim 19, **characterised in that** an insert (5) lies in its target position as soon as the entire width of the grid pattern of the transmitted light beams (11) lies on the reference line elements (13) of the respective position mark.

21. Device according to claim 20, **characterised in that** in the case of complete detection of the reference line elements of a position mark a trigger signal, by means of which switching over from the first to the second operating mode takes place, is generated in the optical sensor (10).

22. Device according to one of claims 20 and 21, **characterised in that** the sample holder (4) when the insert (5) lies in the target position is stopped so that on identification of the sample tubelet (2) mounted in the insert (5) the needle (9) is introducible into the closure (3) thereof for removal of a sample.

23. Device according to claim 22, **characterised in that** on detection of a reference barcode (16) in the second operating mode a fault or warning report is generated.

24. Device according to one of claims 9 to 23, **characterised in that** an external trigger signal for switching over to the first operating mode can be read into the optical sensor (10).

25. Device according to one of claims 1 to 24, **characterised in that** this is a component of a blood analysis device (1).

## Revendications

1. Dispositif de positionnement d'objets qui sont formés de tubes à échantillon (2) dans une position de consigne, avec un émetteur émettant des rayons lumineux d'émission (11), un récepteur recevant des rayons lumineux de réception et un capteur optique (10) présentant une unité d'évaluation, la position de consigne étant balayée au moyen des rayons lumineux d'émission (11), avec au moins un dispositif de réception dans lequel un nombre prédéfini d'objets est logé dans des positions d'insertion prédéfinies, et avec un système de transport (6) au moyen duquel le dispositif de réception est déplacé par rapport au capteur optique (10), chaque position d'insertion étant identifiée par une marque de position et cette marque de position étant chaque fois placée sur ces emplacements ou logements d'insertion (5), et une marque d'objet étant placée en plus sur chaque objet et chaque objet étant identifiable à l'aide de cette marque d'objet au moyen du capteur optique (10),
**caractérisé par le fait que**
l'on arrête le dispositif de réception dès que la marque de position d'une position d'insertion pour un objet prédéfini est saisie par le capteur optique (10).

2. Dispositif selon la revendication 1, **caractérisé par le fait que** le capteur optique (10) est formé par un lecteur de codes-barres.

3. Dispositif selon l'une des revendications 1 ou 2, **caractérisé par le fait que** le dispositif de réception est formé par un porte-échantillons (4) dans lequel les tubes à échantillon (2) formant les objets sont logés dans les emplacements ou logements d'insertion (5) formant les positions d'insertion.

4. Dispositif selon la revendication 3, **caractérisé par le fait que** les tubes à échantillon (2) logés dans les emplacements ou logements d'insertion (5) du porte-échantillons (4) sont disposés parallèlement à distance les uns des autres, les axes longitudinaux des tubes à échantillon (2) s'étendant perpendiculairement à la direction de transport du porte-échantillons (4).

5. Dispositif selon la revendication 4, **caractérisé par le fait que** la position de consigne s'étend le long d'une droite S qui s'étend parallèlement aux axes longitudinaux des tubes à échantillon (2) logés dans le porte-échantillons (4).

6. Dispositif selon l'une des revendications 4 ou 5, **caractérisé par le fait que** les rayons lumineux d'émission (11) du capteur optique (10) sont guidés le long de la droite S formant la position de consigne.

7. Dispositif selon la revendication 6, **caractérisé par le fait que** l'on balaye au moyen des rayons lumineux d'émission (11) une trame plane rectangulaire, la droite S définissant la position de consigne s'étendant à l'intérieur de la trame et dans sa direction longitudinale.

8. Dispositif selon l'une des revendications 3 à 7, **caractérisé par le fait que** les marques de position sont placées chaque fois sur l'axe longitudinal de l'emplacement ou logement d'insertion (5) associé sur la surface latérale du porte-échantillons (4) tournée vers le capteur optique (10), les marques de position étant chaque fois placées au niveau de l'extrémité inférieure d'un tube à échantillon (2) logé dans l'emplacement (5) respectif.

9. Dispositif selon la revendication 8, **caractérisé par le fait que** chaque marque de position présente un code-barres de position (12) dans lequel le numéro de l'emplacement ou logement d'insertion (5) est codé.

10. Dispositif selon l'une des revendications 8 ou 9, **caractérisé par le fait que** chaque marque de position présente deux éléments linéaires de référence (13) qui sont placés l'un derrière l'autre à distance en direction longitudinale de l'emplacement ou logement d'insertion (5) avec des axes longitudinaux s'étendant perpendiculairement à l'axe longitudinal de l'emplacement ou logement d'insertion (5).

11. Dispositif selon la revendication 9, **caractérisé par le fait que** les éléments linéaires de référence (13) d'une marque de position sont placés de part et d'autre du code-barres de position (12) dans ses zones de repos.

12. Dispositif selon l'une des revendications 10 ou 11, **caractérisé par le fait que** les longueurs des éléments linéaires de référence (13) sont plus petites que la largeur de la trame balayée par le capteur optique (10).

13. Dispositif selon la revendication 12, **caractérisé par le fait que** les éléments linéaires de référence (13) sont identiques.

14. Dispositif selon l'une des revendications 8 à 13, **caractérisé par le fait que** lorsqu'un emplacement ou logement d'insertion (5) se trouve dans la position de consigne, une aiguille (9) peut être introduite à travers le bouchon (3) à l'extrémité supérieure du tube à échantillon (2) pour prélever un échantillon du tube à échantillon (2) logé dans cet emplacement ou logement d'insertion (5).

15. Dispositif selon la revendication 14, **caractérisé par le fait que** le diamètre du bouchon (3) est supérieur à la longueur des éléments linéaires de référence (13).

16. Dispositif selon l'une des revendications 1 à 15, **caractérisé par le fait que** la marque d'objet est formée par un code-barres d'objet (14) placé sur le côté extérieur d'un tube à échantillon (2), dans lequel le contenu du tube à échantillon (2) est codé.

17. Dispositif selon la revendication 16, **caractérisé par le fait que** chaque emplacement ou logement d'insertion (5) présente sur son côté tourné vers le capteur optique (10) une ouverture (15) à travers laquelle le code-barres d'objet (14) placé sur le tube à échantillon (2) logé dans cet emplacement ou logement d'insertion (5) est visible.

18. Dispositif selon la revendication 17, **caractérisé par le fait qu'**un code-barres de référence (16) permettant de vérifier l'occupation de l'emplacement ou logement d'insertion (5) par un tube à échantillon (2) est placé sur le côté intérieur d'un emplacement opposé à l'ouverture (15), le code-barres de référence (16) étant visible à travers l'ouverture (15) quand l'emplacement ou logement d'insertion (5) est vide et masqué par le tube à échantillon (2) quand l'emplacement (5) est occupé.

19. Dispositif selon l'une des revendications 8 à 18, **caractérisé par le fait que**, dans un premier mode de fonctionnement permettant de positionner un emplacement ou logement d'insertion (5) dans la position de consigne, les rayons lumineux d'émission (11) du capteur optique (10) balayent une première zone de balayage qui est adaptée à la taille des marques de position et que, dans un deuxième mode de fonctionnement, l'emplacement ou logement d'insertion (5) se trouvant dans la position de consigne, celui-ci est balayé sur toute sa longueur à l'intérieur d'une deuxième zone de balayage.

20. Dispositif selon la revendication 19, **caractérisé par le fait qu'**un emplacement ou logement d'insertion (5) se trouve dans sa position de consigne dès que toute la largeur de la trame des rayons lumineux d'émission (11) se trouve sur les éléments linéaires de référence (13) de la marque de position respective.

21. Dispositif selon la revendication 20, **caractérisé par le fait que** la saisie complète des éléments linéaires de référence d'une marque de position dans le capteur optique (10) provoque la génération d'un signal de déclenchement au moyen duquel a lieu une commutation du premier mode de fonctionnement dans le deuxième mode de fonctionnement.

22. Dispositif selon l'une des revendications 20 ou 21, **caractérisé par le fait que** le porte-échantillons (4) s'arrête quand un emplacement (5) se trouve dans la position de consigne de telle manière que, le tube à échantillon (2) logé dans l'emplacement (5) étant identifié, l'aiguille puisse être introduite dans son bouchon (3) pour prélever un échantillon.

23. Dispositif selon la revendication 22, **caractérisé par le fait qu'**un message d'erreur ou d'avertissement est généré en cas de détection d'un code-barres de référence (16) dans le deuxième mode de fonctionnement.

24. Dispositif selon l'une des revendications 19 à 23, **caractérisé par le fait qu'**un signal de déclenchement externe permettant la commutation dans le premier mode de fonctionnement peut être lu dans le capteur optique (10).

25. Dispositif selon l'une des revendications 1 à 2, **caractérisé par le fait qu'**il fait partie d'un dispositif d'analyse de sang (1).
